# EUROPEAN PATENT APPLICATION

(11) **EP 3 722 125 A1**
(43) Date of publication of application: **14.10.2020**
(21) Application number: 20164540.5
(22) Date of filing: 20.03.2020
(51) Int. Cl.: B60H 1/32, B60J 9/04, B60P 3/20, B62D 33/04, F25D 17/04, F25D 23/02

(54) **CURTAIN AND A REFRIGERATED VEHICLE WITH A CURTAIN**

(30) Priority: 08.04.2019 CN 201910275838
(71) Applicant: Carrier Corporation, Palm Beach Gardens, FL 33418 (US)
(72) Inventor: CHEN, Linhui, Pudong District, Shanghai 201206 (CN); LI, Hui, Pudong District, Shanghai 201206 (CN)
(74) Representative: Dehns

(57) **Abstract**

A refrigeration unit for transportation, a door curtain thereof and a refrigeration vehicle are disclosed by the present application. The door curtain includes: a curtain body (23); and a track (30), wherein the curtain body (23) is movably mounted on the track (30), and the track (30) has a main section (31) for guiding the curtain body (23) to move into a door area (19) so as to be thermally insulated from the outside, and an extension section (32) for guiding the curtain body (23) to move out of the door area (19). The door curtain is a movable door curtain that is movable relative to the door.

## Description

The present application relates to a refrigeration unit for transportation, a door curtain of the refrigeration unit, and a refrigeration vehicle having the refrigeration unit and the door curtain.

Cold-chain distribution systems are used to transport and distribute goods, especially perishables and environmentally sensitive items that are susceptible to temperature, humidity and other environmental factors. Generally, it is required for the cold-chain distribution systems to effectively transport and distribute perishables without damage or other adverse effects.

Refrigeration vehicles and trailers are mostly used to transport perishables in cold-chain distribution systems. A refrigeration machine set is mounted on the vehicle or trailer to provide refrigerated air for a goods space so that the temperature environment of the goods space is maintained.

Perishables are always in a controlled temperature environment when being transported to their destination. However, when they are being unloaded after arriving at the destination, since the goods space is opened and no longer closed, and meanwhile the refrigeration machine set is shut down, it becomes complicated and difficult to control the environment of the goods space. In a short-range inter-city cold-chain distribution, the door is opened and closed for several times to unload goods due to the transportation between multiple destinations. Even if the opening degree of the door is kept as small as possible, it still affects an indoor temperature and is not advantageous for the unloading efficiency. In some cases, the door has to be kept open, so that the temperature in the goods space quickly rises and exceeds a prescribed temperature level. In order to reduce the spread of cold air, a heat insulation door curtain will be additionally mounted on the refrigeration vehicle. However, this heat insulation door curtain is fixed on the top of vehicle compartment and is very heavy, which hinders people from entering and exiting the compartment and adds inconvenience to loading and unloading goods.

According to a first aspect of the present invention there is provided a door curtain of a refrigeration unit for transportation, which includes: a curtain body; and a track, wherein the curtain body is movably mounted on the track, and the track has a main section for guiding the curtain body to move into a door area so as to be thermally insulated from the outside, and an extension section for guiding the curtain body to move out of the door area. The door curtain is a movable door curtain that is movable relative to the door.

According to another aspect of the present invention there is provided a refrigeration unit for transportation, wherein the refrigeration unit includes a cabinet, the cabinet includes a door, and a refrigeration space defined inside the cabinet, and the refrigeration unit further includes:
a door curtain, which includes:
a curtain body; and
a track disposed in the cabinet, wherein the curtain body is movably mounted on the track, and the track has a main section corresponding to the door and an extension section expanding near the door.

In some embodiments, the curtain body has, on the track, a first position in which the curtain body moves to the main section, a second position in which the curtain body moves to the extension section, and a third position between the first position and the second position; wherein in the first position, the curtain body covers a door area to close the refrigeration space; in the second position, the curtain body is housed in the cabinet and the refrigeration space is opened; and in the third position, the curtain body closes a part of the refrigeration space.

In some embodiments, the extension section is oriented differently from the main section such that the curtain body moves on the track after changing direction.

In some embodiments, a length of the extension section enables the entire curtain body to move into the extension section.

In some embodiments, the door curtain is located at a distal end of an area where a refrigerated gas is supplied in the cabinet.

In some embodiments, the door is a hinged door behind or on the side of the cabinet, and the extension section is disposed on at least one side along an inner wall of the cabinet.

In some embodiments, the curtain body includes a first sliding curtain and a second sliding curtain arranged opposite to each other, the extension section includes a first extension section and a second extension section, and the main section is connected between the first extension section and the second extension section.

In some embodiments, the curtain body is made of plastic or fabric.

According to another aspect of the present invention there is provided a refrigeration vehicle, which includes: a vehicle compartment constructed according to the refrigeration unit described above; and a refrigerating device for providing a refrigerated gas to the vehicle compartment; wherein the curtain body is capable of moving from the extension section toward the main section to close at least part of the refrigeration space without closing the door.

Even when the door is open, the door curtain can close the refrigeration space, partially close/open the refrigeration space, or fully open the refrigeration space, depending on the situation. The fluctuation of indoor temperature after each time of unloading is reduced, and the energy consumption of inter-city transportation is greatly reduced, thereby extending the maximum mileage of the vehicle. At the same time, this kind of door curtain has no effect on the unloading personnel. The unloading personnel can pull the door curtain to an extent which facilitates people and goods to enter and exit according to the sizes of unloaded goods. Although there is still leakage of cold air during unloading, the amount of leaked cold air is greatly reduced as compared to the case of fully opening the refrigeration space. When the refrigeration space is fully opened by the door curtain, the door curtain can be hidden on either side of the space to save the space.

Other aspects and features of the present application will become apparent from the following detailed description with reference to the drawings. However, it should be understood that the drawings are intended for the purpose of illustration only, rather than defining the scope of the present application, which should be determined with reference to the appended claims. It should also be understood that the drawings are merely intended to conceptually illustrate the structure and flowchart described herein, and it is not necessary to draw the figures to the scale, unless otherwise specified.

The present application will be more fully understood from the following detailed description of specific embodiments with reference to the drawings, in which identical elements in the views are always denoted by identical reference signs, wherein:
FIG. 1 is a schematic view of a door curtain;
FIG. 2 is a schematic view of another door;
FIG. 3 is a schematic view of still another door curtain; and
FIGS. 4-6 show three use states of a door curtain, wherein FIG. 4 shows a fully opened state of the door curtain, FIG. 5 shows a fully closed state, and FIG. 6 show a half-closed state.

To help those skilled in the art precisely understand the subject matter of the present application, specific embodiments of the present application are described in detail below with reference to the accompanying drawings.

The present application is applied to a refrigeration vehicle for cold-chain distribution. Herein, the refrigeration vehicle may be various types of vehicles, including but not limited to trucks, trailers, lorries, and the like. The vehicle has a vehicle compartment provided with a goods space. The vehicle compartment is further equipped with a refrigeration machine set to provide cold air to the goods space, so that a temperature environment of the goods space is maintained at a prescribed level.

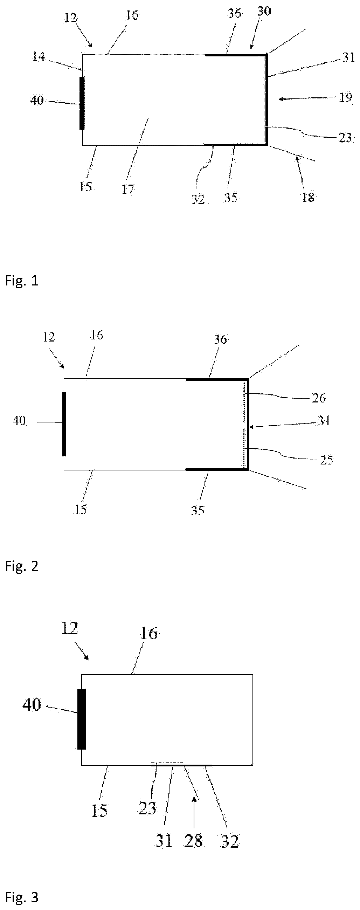

FIG. 1 is a schematic view of an embodiment of a door curtain according to the present application. The vehicle compartment is constructed as a thermal insulation box or a cabinet 12. The cabinet 12 includes a first side wall 14 arranged forwardly in a travelling direction of the vehicle, as well as a second side wall 15 and a third side wall 16 in a width direction of the vehicle. A pair of hinged doors 18 and a door curtain inside the doors are provided behind the cabinet. The door curtain includes a curtain body 23, and a track 30 fixed to the cabinet 12. For the sake of clarity, the curtain body 23 is shown in dotted lines and separated from the track 30. The curtain body 23 is mounted on the track 30 and is movable relative to the track 30. The curtain body 23 may be mounted on the track 30 in a variety of known ways. The curtain body 23 may be directly mounted on the track 30, or the curtain body 23 may be mounted on the track 30 through other attachment structures. The curtain body 23 is made of a soft material such as plastic and cloth (fabric), which has a certain thermal insulation function. The track 30 is disposed at the top and bottom of the cabinet 12, and provides support to the curtain body 23 in addition to guiding the movement of the curtain body 23.

The track 30 includes a main section 31 and an extension section 32. The main section 31 is disposed corresponding to the doors of the cabinet, and a door frame defines a door area 19. When the curtain body 23 moves to the main section 31, as shown in the figure, the door area 19 may be covered, thereby acting as a door and separating the indoor refrigeration space 17 from the outside. The extension section 32 expands near the door, and can guide the curtain body 23 to move out of the door area 19. It is conceivable that when the curtain body 23 moves toward the extension section 32, the portion of the door area 19 that is not blocked by the curtain body 23 forms an opening or a passage in which the refrigeration space 17 communicates with the outside. This opening is maximized when the curtain body 23 completely leaves the door area 19, which will be mentioned in detail below.

Referring again to FIG. 2, the door curtain may be arranged symmetrically, and two symmetrical parts thereof are shown by two dotted lines 25 and 26. These two parts move close to or away from each other. Unlike the door 18 of the vehicle compartment, which is opened or closed in a hinged manner, the door curtain open and closes the space by sliding. The curtain body includes a first sliding curtain 25 and a second sliding curtain 26. Correspondingly, a main section 31 and opposite first and second extension sections 35 and 36 connected by the main section are at least provided on the track. The track may be a track including a main section and two extension sections on both sides of the main section, or two tracks corresponding to the first sliding curtain and the second sliding curtain respectively, each track including a main section and an extension section. The advantage of the symmetrical arrangement of the door curtain is that it is made easy to make room for the loading and unloading passage constructed in the center of the vehicle compartment.

With continued reference to the drawings, the first extension section 35 and the second extension section 36 are disposed along the second side wall 15 and the third side wall 16 respectively so that the track is substantially formed as a right-angled track. Of course, in order to facilitate sliding the curtain body, small rounded corners may be provided at the right-angled positions. The lengths of the two extension sections are set to be capable of receiving the first sliding curtain 25 and the second sliding curtain 26 respectively, that is, the first sliding curtain 25 and the second sliding curtain 26 can completely move into the respective extension sections 35 and 36, so that when the door area does not need to be covered by the curtain body, the curtain body is "hidden" at the second side wall 15 and the third side wall 16 inside the cabinet, thereby saving space.

A refrigeration machine set 40 is disposed in front of the cabinet 12 and provides refrigerated gas to the cabinet 12. When the doors 18 are opened as required for loading and unloading operations, the temperature environment of the area near the doors 18 is more susceptible to the outside than other parts inside the cabinet, resulting in uneven temperature distribution in the cabinet and large temperature fluctuation, which is not advantageous for retaining freshness of the goods. Providing the door curtain at the doors 18 can effectively block the convective heat exchange between cold air and hot air.

The doors may be disposed behind the cabinet or on the side of the cabinet. Referring to FIG. 3, the door curtain according to the present application is shown in dash dot lines, which is disposed at a side door 28. The track is disposed along the inner wall 15 of the cabinet, and includes a main section 31 and an extension section 32 on one side of the main section 31. The main section 31 corresponds to a door area. When the curtain body 23 is on the main section 31, the space inside the cabinet is isolated from the outside, as shown in the figure. When the curtain body 23 moves toward the extension section 32, a part of the door area is opened until fully opened, and becomes a passage for people or goods to enter and exit. The extension section 32 may be on either side of the main section 31, that is, the extension section may be on one side of the main section as illustrated, or on the other side of the main section. The curtain body may be one door curtain as shown in FIG. 1, or may be two sliding door curtains as shown in FIG. 2. In the case of two door curtains (or side doors opposite to each other), the extension section is disposed on each of the two sides of the main section respectively. The door curtain involved in the present application may be used in a refrigeration vehicle with hinged doors disposed behind the cabinet, or in a refrigeration vehicle with hinged doors disposed on either side or both sides of the cabinet, or in a refrigeration vehicle with hinged doors disposed behind the cabinet and on at least one side at the same time.

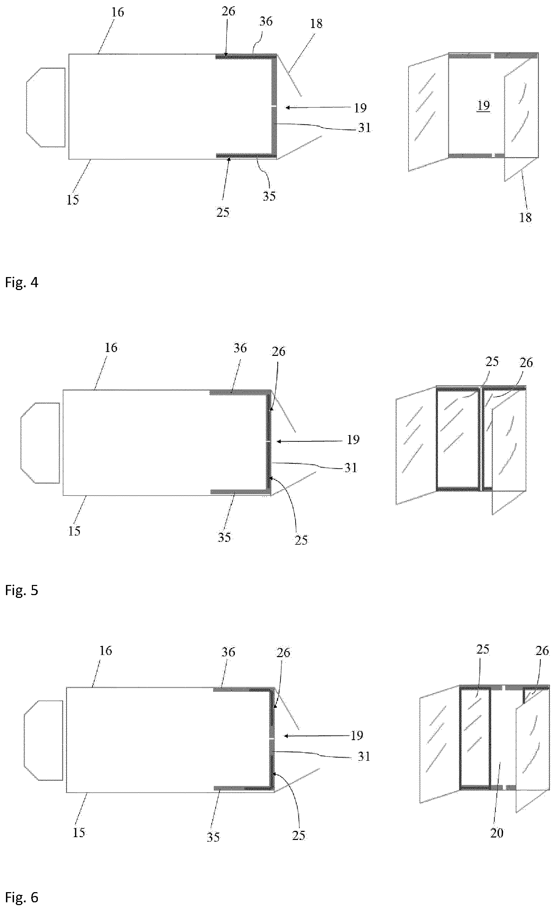

FIGS. 4 to 6 show three use states of the door curtain when rear doors are opened. In FIG. 4, the door curtain is hidden in the second and third side walls 15 and 16 of the cabinet, and the first sliding curtain 25 and the second sliding curtain 26 are located in the first extension section 35 and the second extension section 36. There is no door curtain in the main section 31, and the door area 19 (that is, the refrigeration space) is fully opened for loading and unloading large-sized goods. In FIG. 5, the door curtain is in the door area, that is, the first sliding curtain 25 and the second sliding curtain 26 are located in the main section 31, and there is no door curtain in the first extension section 35 and the second extension section 36. Although the doors are opened, since the door curtain covers the door area so that the refrigeration space is isolated from the outside, this state is suitable when goods loading and unloading is temporarily not being performed. In FIG. 6, the door area is in a half-open state, that is, parts of the first sliding curtain 25 and the second sliding curtain 26 are in the main section 31, and other parts are in the respective extension sections 35, 36. A loading/unloading passage 20 is reserved in the part of the door area that is not blocked by the door curtain. This state is suitable when the size of the goods is not large, and unnecessary heat exchange is effectively blocked. In addition, the passage is free of obstacles, making it easy for people or goods to enter and exit. The above process of using the door curtain is also applicable to hinged doors disposed on the side of the cabinet.

While the specific embodiments of the present application have been shown and described in detail to illustrate the principles of the application, it should be understood that the present application can be implemented in other ways without departing from the scope of the claims.

## Claims

1. A door curtain of a refrigeration unit for transportation, comprising:
a curtain body (23) ; and
a track (30), wherein the curtain body (23) is movably mounted on the track (30), and the track has a main section (31) for guiding the curtain body to move into a door area (19) so as to be thermally insulated from the outside, and an extension section (32) for guiding the curtain body (23) to move out of the door area.

2. A refrigeration unit for transportation, the refrigeration unit comprising a cabinet, the cabinet comprising a door, and a refrigeration space inside the cabinet, the refrigeration unit further comprising:
a door curtain, optionally as claimed in claim 1 which comprises:
a curtain body (23); and
a track (30) disposed in the cabinet, wherein the curtain body (23) is movably mounted on the track, and the track has a main section (31) corresponding to the door and an extension section expanding near the door.

3. The refrigeration unit according to claim 2, wherein the curtain body (23) has, on the track (30), a first position in which the curtain body moves to the main section (31), a second position in which the curtain body moves to the extension section (32), and a third position between the first position and the second position; wherein in the first position, the curtain body (23) covers a door area (19) to close the refrigeration space; in the second position, the curtain body (23) is housed in the cabinet and the refrigeration space is opened; and in the third position, the curtain body (23) closes a part of the refrigeration space.

4. The refrigeration unit according to claim 2 or 3, wherein the extension section (32) is oriented differently from the main section (31) such that the curtain body moves on the track (30) after changing direction.

5. The refrigeration unit according to any one of claims 2 to 4, wherein a length of the extension section (32) enables the entire curtain body (23) to move into the extension section.

6. The refrigeration unit according to any one of claims 2 to 5, wherein the door curtain is located at a distal end of an area where a refrigerated gas is supplied in the cabinet.

7. The refrigeration unit according to any one of claims 2 to 6, wherein the door is a hinged door behind or on the side of the cabinet, and the extension section (32) is disposed on at least one side along an inner wall of the cabinet.

8. The refrigeration unit according to any one of claims 2 to 7, wherein the curtain body (23) comprises a first sliding curtain (25) and a second sliding curtain (26) arranged opposite to each other, the extension section (32) comprises a first extension section (35) and a second extension section (36), and the main section (31) is connected between the first extension section and the second extension section.

9. The refrigeration unit according to any one of claims 2 to 8, wherein the curtain body (23) is made of plastic or fabric.

10. A refrigeration vehicle, comprising:
a vehicle compartment constructed according to the refrigeration unit according to any one of claims 2 to 9; and
a refrigerating device for providing a refrigerated gas to the vehicle compartment; wherein the curtain body (23) is capable of moving from the extension section (32) toward the main section (31) to close at least part of the refrigeration space without closing the door.
